# EUROPEAN PATENT APPLICATION

(11) **EP 3 296 008 A1**
(43) Date of publication of application: **21.03.2018**
(21) Application number: 15892512.3
(22) Date of filing: 15.05.2015
(51) Int. Cl.: B01D 46/52

(54) **HIGH-TEMPERATURE FILTER**

(71) Applicant: Cambridge Filter Japan Ltd., Tokyo 105-0014 (JP)
(72) Inventor: YAMAZAKI, Akira, Tokyo 150-0002 (JP); MURATA, Yuji, Tokyo 150-0002 (JP)
(74) Representative: Schmidt, Steffen J.
(86) International application number: PCT/JP2015/064010
(87) International publication number: WO 2016/185511

(57) **Abstract**

To provide a high-temperature filter having a seal to maintain filtering properties and genarating less dust at a high temperature. The high-temperature filter (1) comprises a filtering medium (2) made of glass fibers, which is folded in a zigzag pattern; a separator (4) that is folded in a wave shape and inserted into gaps of the filtering medium; a frame (6) made of stainless steel that houses the filtering medium and the separator; and end seals (8) made of ceramic that is applied to the frame and solidified after an end of the filtering medium is immersed thereinto, which ceramic is modified to have a coefficient of thermal expansion that is the same as that of the stainless steel. The separator is preferably made of the glass fibers used for the filtering medium. A spacer (14) may be provided on the surface of the filtering medium instead of the separator.

## Description

### Technical Field

The present invention relates to a filter that is suitable to filter high-temperature air.

### Background Art

Generally, to create a dust-free and a germfree environment under a high temperature, HEPA (High Efficiency Particulate Air Filter) filters are configured as follows: A paper-like filtering medium that is made of fine glass fibers is folded into a zigzag pattern. A separator that is made by folding a piece of stainless steel or aluminum foil into a wave shape is inserted into the gaps of the zigzag pattern. The filtering medium and the separator are normally housed in a frame that is made of stainless steel.

Such a filter utilizes end seals that are formed by immersing the filtering medium in sealants at the top and the bottom of the frame and by solidifying the sealants. However, at a high temperature the end seals may be damaged due to the difference in thermal expansions of the end seals and the stainless steel frame. Thus a problem, i.e., a leak of filtered air, arises. Thus an invention is proposed wherein a filtering medium is fixed to flat plates by the end seals and a cushion material is provided between the flat plates and the frame (see Japanese Patent Laid-open Publication No. 2012- 91071).

However, when the cushion material is provided between the frame and the filtering medium, the cushion material is subject to plastic deformation under repeated changes in temperature. As a result, a gap is generated between the frame and the filtering medium so as to cause the filtered air to leak. This may possibly cause a problem.

In such a filter, when high-temperature air is filtered, the filtering medium and the separator rub against each other due to the difference in their thermal expansions, to thereby generate dust. This may also possibly cause a problem. Thus an invention is proposed wherein a ceramic adhesive is applied to the peaks of the separator, which separator is placed downstream of the filtering medium, so that the separator does not contact the filtering medium, to thereby reduce generated dust (see Japanese Patent Laid-open Publication No. 2005- 13796).

By applying a ceramic adhesive so that the separator that is placed downstream of the filtering medium does not contact the filtering medium, the amount of dust that is generated can be reduced. However, this remedy is not sufficient, and so there is a request to further reduce the amount of generated dust. Incidentally, ceramic is commonly known to have a high heat resistance. However, when it is used for the end seals, a difference between the thermal expansion of the end seals and that of the frame may possibly cause a problem. It is also known that ceramic is damaged because of the difference in thermal expansions, so that the seal cannot be maintained.

Thus an object of the present invention is to provide a high-temperature filter that has a seal to maintain filtering properties at a high temperature and that generates less dust at a high temperature.

### Disclosure of the Invention

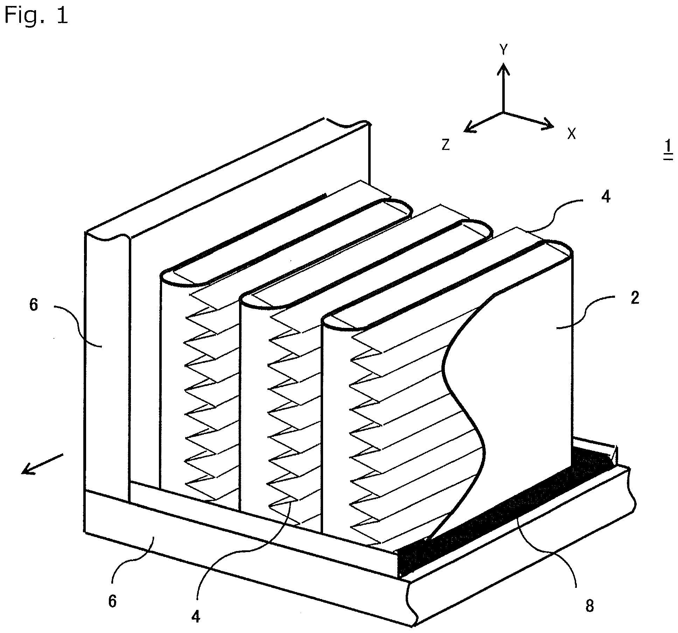

To solve the above-described problems, as is shown in Figure 1, for instance, a high-temperature filter 1 of the first aspect of the present invention comprises a filtering medium 2 that is made of glass fibers, which filtering medium is folded in a zigzag pattern. It also comprises a separator 4 that is folded in a wave shape, which separator is inserted into gaps of the folded filtering medium 2. It also comprises a frame 6 that is made of stainless steel, which frame houses the filtering medium 2 and the separator 4. It also comprises end seals 8 that are made of ceramic that is applied to the frame 6 and is solidified after an end of the filtering medium 2 is immersed into it, which ceramic is modified to have a coefficient of thermal expansion that is the same as that of the stainless steel.

By this configuration, since the end seals have a coefficient of thermal expansion that is the same as that of the stainless steel, no difference in thermal expansions between ceramic and the stainless steel frame exists. Thus no crack or damage will generally occur in the ceramic of the end seals, so that the seal maintains the filtering properties.

As is shown in Figure 1, for instance, by the high-temperature filter of the second aspect of the present invention, in the high-temperature filter 1 of the first aspect the separator 4 is made of the same material as the glass fibers that form the filtering medium 2. By this configuration because there is no difference in their thermal expansions the filtering medium and the separator do not rub against each other. Thus the amount of generated dust can be reduced.

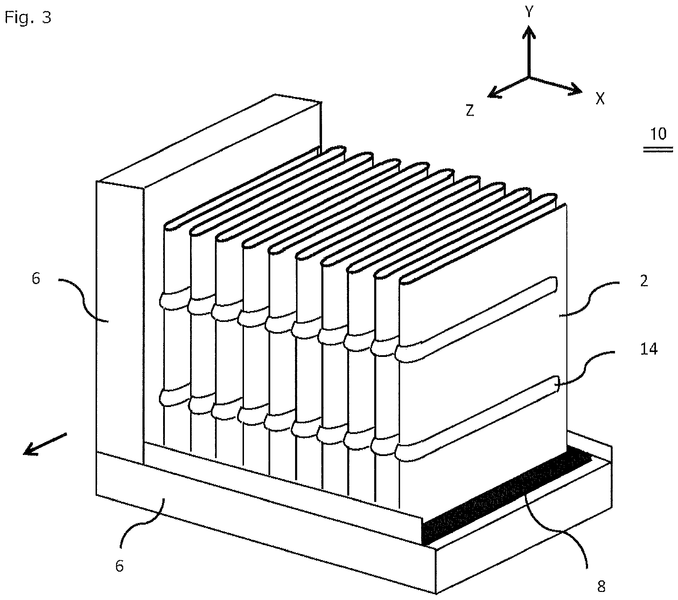

As is shown in Figure 3, for instance, a high-temperature filter of the third aspect of the present invention comprises a filtering medium 2 that is made of glass fibers, which filtering medium is folded in a zigzag pattern. It also comprises a spacer 14 that is made of the same material as the glass fibers that form the filtering medium 2, which spacer is located on a surface of the filtering medium 2. It also comprises a frame 6 that is made of stainless steel, which frame houses the filtering medium 2 and the spacer 14. It also comprises end seals 8 that are made of ceramic that is applied to the frame 6 and is solidified after an end of the filtering medium 2 is immersed into it, which ceramic is modified to have a coefficient of thermal expansion that is the same as that of the stainless steel. By this configuration no crack or damage will generally occur in the ceramic of the end seals, so that the seal maintains the filtering properties. Further, since the spacer is made of the same material as the glass fibers that form the filtering medium, because there is no difference in their thermal expansions the filtering medium and the spacer do not rub against each other. Thus the amount of generated dust can be reduced.

As is shown in Figure 1, for instance, by the high-temperature filter of the fourth aspect of the present invention, in the high-temperature filter 1 of any of the first to third aspects the end seals 8 are 3 mm thick or more and 5 mm thick or less. By this configuration, since the end seals have a thickness of 3 mm or more and 5 mm or less, it becomes easy to cause the filtering medium to be immersed in them, to solidify the end seals.

As is shown in Figure 1, for instance, by the high-temperature filter of the fifth aspect of the present invention, in the high-temperature filter 1 of any of the first to fourth aspects the filtering medium 2 has a repellency of 3,000 Pa or more and 8,000 Pa or less in a test under U.S. Military Standards Q101. By this configuration, since the filtering medium has an appropriate repellency, it becomes easy to cause the filtering medium to be immersed in the ceramic for the end seals to solidify the ceramic.

By the present invention, since the end seals have a coefficient of thermal expansion that is the same as that of the stainless steel for forming the frame, a high-temperature filter having the following advantages can be provided. That is, no difference in thermal expansions between ceramic and the stainless steel frame exists. Thus no crack or damage will generally occur in the ceramic of the end seals, so that the seal maintains the filtering properties. Further, since the separator or the spacer is made of the same material as the glass fibers that form the filtering medium, because there is no difference in their thermal expansions the filtering medium and the separator or spacer do not rub against each other. Thus the amount of generated dust can be reduced.

The present invention will become more fully understood from the detailed description given below. However, that description and the specific embodiments are only illustrations of the desired embodiments of the present invention, and so are given only for an explanation. Various possible changes and modifications will be apparent to those of ordinary skill in the art on the basis of the detailed description.

The applicant has no intention to dedicate to the public any disclosed embodiment. Among the disclosed changes and modifications, those which may not literally fall within the scope of the present claims constitute, therefore, under the doctrine of equivalents, a part of the present invention.

The use of the articles "a," "an," and "the" and similar referents in the specification and claims are to be construed to cover both the singular and the plural form of a noun, unless otherwise indicated herein or clearly contradicted by the context. The use of any and all examples, or exemplary language (e.g., "such as") provided herein is intended merely to better illuminate the invention, and so does not limit the scope of the invention, unless otherwise stated.

### Brief Description of the Drawings

[Figure 1] Figure 1 is a perspective view of a high-temperature filter with a separator of, and a view with omissions of parts of, an embodiment of the present invention.
[Figure 2] Figure 2 illustrates that the ends of the filtering medium are fixed to the frame by the end seals. (a) and (b) are sectional views along X and Z axes in Figure 1, respectively. In them the separator is omitted.
[Figure 3] Figure 3 is a perspective view of a high-temperature filter with mini-pleats of, and a view with omissions of parts of, an embodiment of the present invention.
[Figure 4] Figure 4 shows graphs of the relationship between the change in temperature and the amount of dust generated by the embodiment. (a) shows the amount of dust generated that has particles of a diameter of 0.5 µm and above. (b) shows the amount of generated dust that has particles of a diameter of 0.3 µm and above.
[Figure 5] Figure 5 is a graph to show the relationship between the change in temperature and the amount of dust generated of a comparative example, wherein a separator that is made of aluminum is used. It shows the amount of dust generated that has particles of a diameter of 0.3 µm and above.
[Figure 6] Figure 6 shows graphs of the relationship between the change in temperature and the amount of dust generated of a comparative example, wherein a separator that is made of stainless steel is used. (a) shows the amount of dust generated that has particles of a diameter of 0.5 µm and above. (b) shows the amount of dust generated that has particles of a diameter of 0.3 µm and above.

### Mode for Carrying Out the Invention

Below, with reference to the drawings the embodiments of the present invention are discussed. In each drawing, devices that are the same as or similar to each other are numbered with the same reference number. Thus duplicate explanations are avoided. Fig. 1 shows a perspective view of a high-temperature filter 1 as an embodiment of the present invention. It shows a view with omissions of parts of the high-temperature filter 1.

The high-temperature filter 1 is a so-called separator-type filter, wherein a filtering medium 2 that is made of glass fibers is folded in a zigzag pattern, and wherein a separator 4 is inserted into gaps of the filtering medium 2 that is folded in a zigzag pattern. Typically, it is a HEPA filter. The filtering medium 2 is typically made of fine glass fibers that are heat resistant. In Fig. 1 the arrow denotes the flow of the air to be filtered. By changing the filtering medium 2, an ULPA (Ultra Low Penetration Air Filter) filter or a filter that has a medium performance can be manufactured.

The separator 4 is made of glass fibers that are the same as those for the filtering medium 2 and is formed like a plate that is folded in a wave shape. The separator 4 that is folded in a wave shape is inserted into the gaps of the filtering medium 2 that is folded in a zigzag pattern so that the shape of the filtering medium 2 that is folded in a zigzag pattern is maintained.

The filtering medium 2 and the separator 4 are housed in a frame 6 that is made of stainless steel. The frame 6 surrounds the filtering medium 2 and the separator 4 except for the face (the face in the Z direction) through which the air to be filtered flows. In the frame 6, side seals (not shown) are provided so as to cover the horizontal edges (X direction) of the face through which the air to be filtered flows. Thus the air is prevented from leaking through the edges. To reinforce the frame 6 a flat bar (not shown) may be provided to connect the horizontal or vertical ends of it.

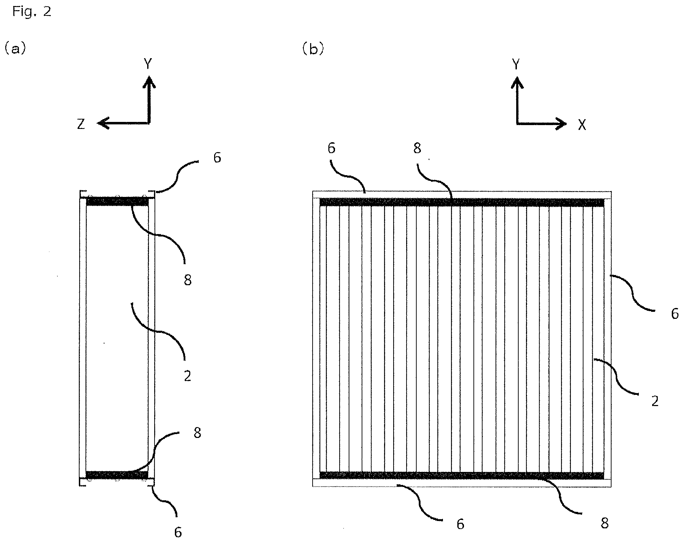

As is shown in Fig. 2, the upper and lower ends (Y direction in Fig. 1) of the filtering medium 2 are fixed to the frame 6 by means of end seals 8. Fig. 2 illustrates that the upper and lower ends of the filtering medium 2 are fixed to the frame 6 by means of the end seals 8. (a) and (b) are sectional views along the X and Z axes in Fig. 1, respectively. In them the separator 4 is omitted for easy visibility. In Fig. 2, the filtering medium 2 is shown to be long enough to contact the frame 6. However, it may be shorter than that.

The end seals 8 are formed by applying ceramic to the insides of the upper and lower plates of the frame 6, wherein the ceramic is modified to have a coefficient of thermal expansion that is the same as that of the stainless steel that forms the frame 6. The wording "the coefficient of thermal expansion that is the same as that of the stainless steel" means a coefficient of thermal expansion that is similar to that of the stainless steel in that no end seal 8 is damaged due to any difference between the thermal expansions of the frame 6 and the end seals 8 at the temperature for using the high-temperature filter 1. It may be within ±10% of the coefficient of the thermal expansion of the stainless steel, preferably within ±5%, and more preferably within ±3%. The coefficient of the thermal expansion of the end seals 8 can be adjusted by mixing multiple kinds of commercially available ceramic. For example, a suspension of aluminum (the coefficient of the thermal expansion is 8×10⁻⁶/°C) and a suspension of silica (the coefficient of the thermal expansion is 13×10⁻⁶ /°C) are mixed together. Any other ceramic may be mixed with them. When the frame 6 is made of ferritic stainless steel, e.g., JIS SUS 430, the coefficient of the thermal expansion of the stainless steel is 10.4× 10⁻⁶/°C. Thus the coefficient of the thermal expansion of the end seals 8 is adjusted to be 11.4×10⁻⁶/°C to 9.4×10⁻⁶/°C.

The end seals 8 are preferably formed to be 1 mm thick or more and 7 mm or less. If they were less than 1 mm thick, no end of the filtering medium 2 could be fixed. Thus air would leak, to thereby flow without being filtered by the filtering medium 2. They are preferably 2 mm thick or more. They are more preferably 3 mm or more. If they are 3 mm thick or more, the filtering medium 2 can be reliably fixed. If they were 7 mm thick or more, they would be uneconomical. Further, the ceramic would be hardly dried. Thus if only the surface of them were to be solidified, the surface would foam because of moisture inside of them. Thus the end seals 8 are preferably 7 mm thick or less. They are more preferably 6 mm thick or less, and further preferably 5 mm thick or less. If they are 5 mm thick or less, the ceramic is appropriately dried.

Below, forming the end seals 8 is discussed. First, the separator 4 is inserted into the gaps of the filtering medium 2 that is folded in a zigzag pattern. Next, the ceramic, the coefficient of the thermal expansion of which is modified, is applied to the inside of one of the upper and lower plates of the frame 6. The end of the filtering medium 2 in the vertical direction, into which the separator 4 is inserted, is immersed in the ceramic. After a predetermined period, if the ceramic solidifies, the ceramic, the coefficient of the thermal expansion of which is modified, is applied to the inside of the other plate of the upper and lower plates of the frame 6. The other end of the filtering medium 2 in the vertical direction, into which filtering medium the separator 4 is inserted, is immersed in the ceramic. The ceramic is dried and solidified. For example, it is first heated to 90 °C and then to 150 °C to form the end seals 8. By forming the end seals 8 in this way, the filtering medium 2 is fixed to the frame 6. Incidentally, no separator 4 may be in advance inserted into the gaps of the filtering medium 2, but a separator 4 may be inserted into the gaps of the filtering medium 2 after the filtering medium 2 is fixed to the frame 6 by means of the end seals 8. Further, after the filtering medium 2 and the separator 4 are located at predetermined positions in the frame 6, the ceramic may be applied to the frame 6 to form the end seals 8. When the ceramic is applied around the end of the filtering medium 2 in this way, the wording "the filtering medium 2 is immersed into the ceramic that is applied to the frame 6" is appropriate.

Now, the relationship between the repellency of the filtering medium 2 and the ceramic is discussed. As discussed above, after the end of the filtering medium 2 is immersed into the ceramic, the ceramic is dried and solidified. Thus, if the repellency were too high, the filtering medium 2 would repel the moisture in the ceramic. Thus it would not get wet in the ceramic, so airspace is created between the filtering medium 2 and the end seals 8. For this reason, the repellency of the filtering medium 2 is preferably 10,000 Pa or less as determined by a test under U.S. Military Standards Q101 (United States Military Standards, Quality Assurance Directorate, Instruction Manual for the Installation, Operation and Maintenance of Indicator, Water-Repellency Q101). It is more preferably 8,000 Pa or less. If it is 8,000 Pa or less, the filtering medium 2 gets wet in the ceramic, so no airspace is created between the filtering medium 2 and the end seals 8. If the repellency were too low, the filtering medium 2 would absorb too much moisture in the ceramic. Thus moisture would be unevenly distributed in the ceramic, resulting in uneven end seals 8. For this reason, the repellency of the filtering medium 2 is preferably 3,000 Pa or more in a test under U.S. Military Standards Q101.

Next, the operations of the high-temperature filter 1 are discussed. As is shown in Fig. 1, hot air to be filtered is caused to flow through the high-temperature filter 1. The high-temperature filter 1 can be used for air up to 500 °C. Since the end seals 8 are made of the ceramic, the high-temperature filter 1 can be used at a high temperature. Further, since the coefficient of the thermal expansion of the frame 6 is the same as that of the end seals 8, because of no difference in their thermal expansions no crack or damage will generally occur in the ceramic of the end seals 8. Thus the seals maintain the filtering properties. Incidentally, the difference between the thermal expansions of the filtering medium 2 and the frame 6 can be absorbed by extension or contraction of the filtering medium 2, which is made of glass fibers. However, the length of any extension or contraction of the filtering medium 2 is limited. The frame 6 is preferably made of ferritic stainless steel. It has a smaller coefficient of thermal expansion than do other types of stainless steel.

Since the filtering medium 2 and the separator 4 are made of the same glass fibers, there is no difference in their thermal expansions even when they are subject to a high temperature. Thus they do not rub against each other, so that no dust is generated.

Next, with reference to Fig. 3, a high-temperature filter 10 with mini-pleats is discussed. The high-temperature filter 10 with mini-pleats differs from the high-temperature filter 1 with the separator in that the high-temperature filter 10 with mini-pleats has no separator 4 and has a spacer 14 on the surface of the filtering medium 2. The other structures are the same. In the high-temperature filter 1 with the separator, since the separator 4 is inserted into the gaps of the filtering medium 2 that is folded in a zigzag pattern, the parts of the filtering medium 2 do not touch each other. So a space for air to flow is formed. In the high-temperature filter 10 with mini-pleats, since the spacer 14 is provided on the surface of the filtering medium 2 to fold the filtering medium 2 in a zigzag pattern, the parts of the filtering medium 2 do not touch each other. So a space for air to flow is formed.

In the high-temperature filter 10 the spacer 14 that is made of the same glass fibers as those for the filtering medium 2 is provided on the surface of the filtering medium 2. For example, a plate that is formed by the glass fibers that are used for the filtering medium 2 is cut into a band-like shape that is 3 mm wide, to be placed on the surface of the filtering medium 2. The thickness of the spacer 14 varies depending on the application, but it is generally about 0.5 to 1.5 mm. Preferably, it is 0.5 to 0.8 mm. Generally some lines of the spacer 14 are provided on the filtering medium 2 in the vertical direction (the vertical direction in Fig. 3) when the filtering medium 2 is assembled in the high-temperature filter 10. But the spacer 14 is not limited to this configuration. The filtering medium 2 together with the spacer 14 is folded in a zigzag pattern. Incidentally, compared to the zigzag pattern of the filtering medium 2 for the high-temperature filter 1, the zigzag pattern may have a thin top and may have a triangular waveform.

In the high-temperature filter 10, since the filtering medium 2 and the spacer 14 are made of the same glass fibers, there is no difference in their thermal expansions even when they are subject to a high temperature. Thus they do not rub against each other, so that no dust is generated.

### Working Example

To see if dust that is generated by the high-temperature filter of the present invention is suppressed, the particles that were generated by changing the temperature of the air were measured, which air was caused to flow through the high-temperature filter for a working example. For a comparative example, a similar measurement was carried out by using a conventional high-temperature filter with a separator that was made of aluminum and stainless steel.

The air that was to be filtered was preliminarily filtered by an ULPA filter. It was blown by a fan at 0.7 m³/min and at room temperature (20 °C). The air was heated by a heater. The heated air was filtered by the high-temperature filter. The temperature of the air was raised from room temperature to 400 °C and returned to room temperature for the working example. For the comparative example, it was raised from room temperature to 350 °C and returned to room temperature. Incidentally, the flow at 350 °C was 1.49 m³/min. The particles that were included in the air before being filtered by the high-temperature filter and the particles that were included in the air after being filtered by the high-temperature filter were counted by a particle counter (SOLAIR 3100+, available from Lighthouse Worldwide Solutions). In this way dust generated by the high-temperature filters can be measured.

The high-temperature filter of the present invention is a HEPA filter with mini-pleats. The external dimensions of it are a lateral size (X direction) of 203 mm, a height (Y direction) of 203 mm, and a depth (Z direction) of 100 mm. The spacer is formed to be 0.7 mm thick and 3 mm wide. The high-temperature filters for the comparative example are two HEPA filters with a separator. The external dimensions of one of them are a lateral size (X direction) of 203 mm, a height (Y direction) of 203 mm, and a depth (Z direction) of 150 mm. The separator is made of aluminum. The external dimensions of the other are a lateral size (X direction) of 610 mm, a height (Y direction) of 610 mm, and a depth (Z direction) of 150 mm. The separator is made of stainless steel.

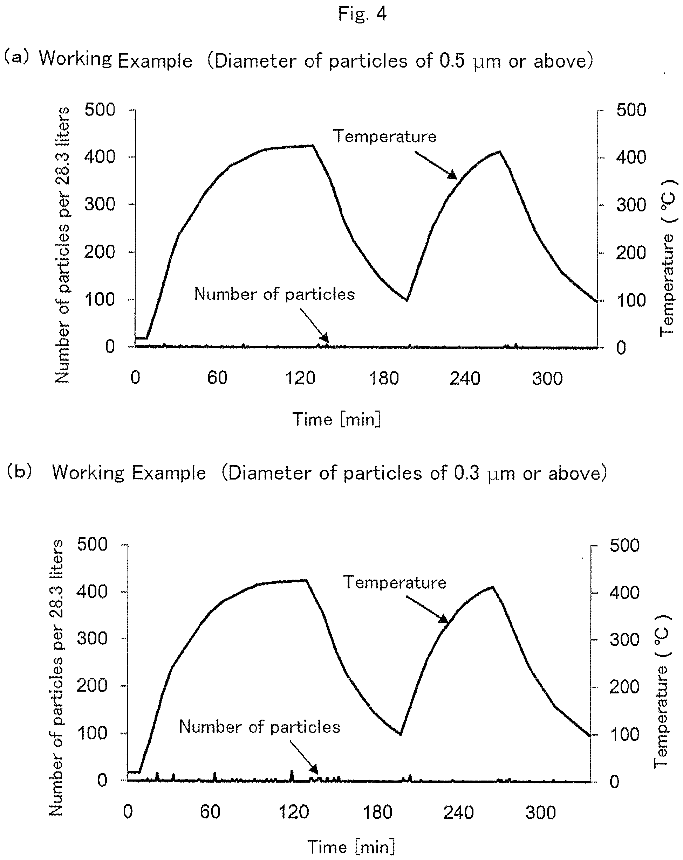

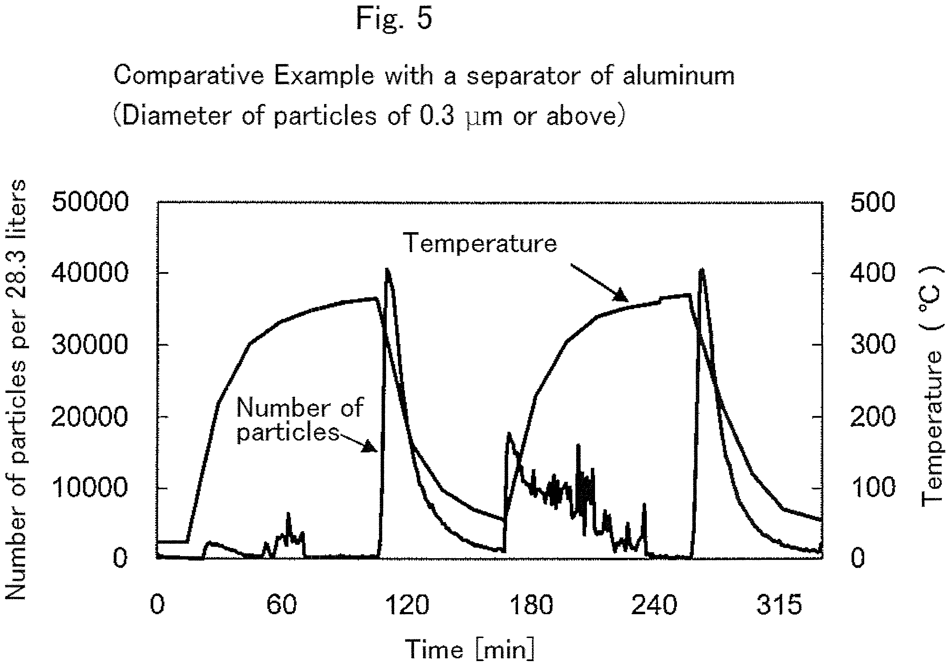

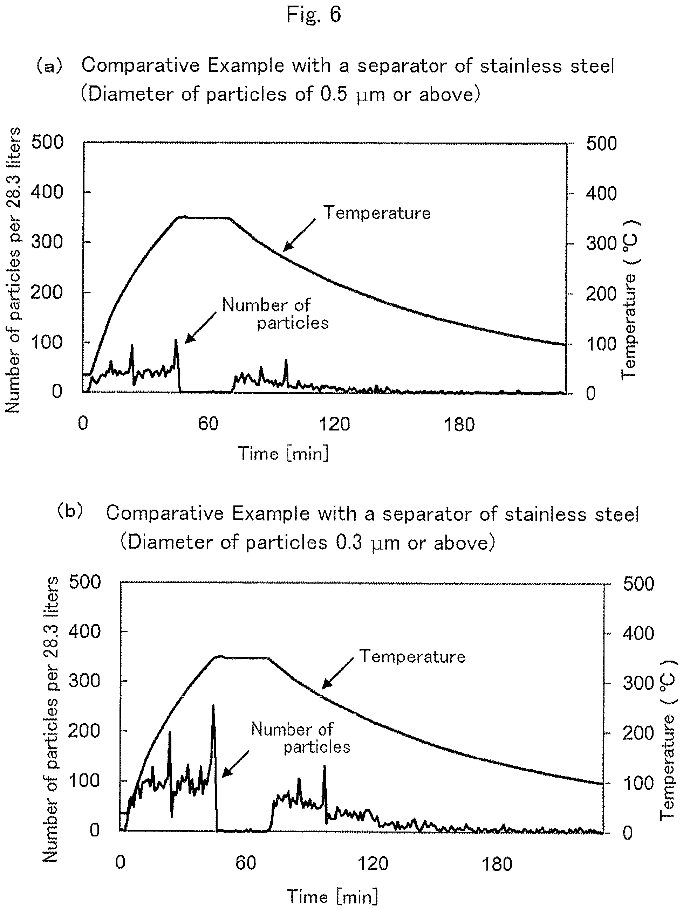

Fig. 4 shows the relationship between the change of temperature and the amount of dust generated for the working example. Fig. 5 shows that of the comparative example, wherein the separator is made of aluminum. Fig. 6 shows that of the comparative example, wherein the separator is made of stainless steel. In Figs. 4 and 6, the graphs in (a) show the amounts of generated dust that has particles of a diameter of 0.5 µm or above, and the graphs in (b) show the amounts of generated dust that has particles of a diameter of 0.3 µm or above. Fig. 5 shows the amounts of generated dust that has particles of a diameter of 0.3 µm or above. In each graph, the ordinate denotes the number of particles generated per 28.3 liters (1 cubic feet) and the temperature (°C), and the abscissa denotes elapsed time (min).

As is obvious from Figs. 4, 5, and 6, the amount of dust generated by the high-temperature filter of the present invention was less, compared to that of the conventional high-temperature filters, when the temperature of the air to be filtered was changed. By the high-temperature filter with the separator that is made of aluminum, as in Fig. 5, when the temperature of the air was raised to 350 °C, about 40,000 particles of a diameter of 0.3 µm or above per 28.3 liters were detected at a maximum. When the temperature of the air was raised and lowered twice, the maximum amount of generated dust was not changed. By the high-temperature filter with the separator that is made of stainless steel, as in Fig. 6, when the temperature of the air was raised to 350 °C, about 100 particles of a diameter of 0.5 µm or above per 28.3 liters and about 250 particles of a diameter of 0.3 µm or above per 28.3 liters were detected at a maximum. By using the separator that is made of stainless steel, the amount of dust generated significantly decreased in comparison with the case where the separator is made of aluminum. The reason is assumed to be that the coefficient of the thermal expansion of the stainless steel, i.e., 10.4 x 10⁻⁶ /°C, is less than that of the aluminum, i.e., 23 x 10⁻⁶/ °C. As shown in Fig. 4, by using the high-temperature filter of the present invention, few particles of a diameter of 0.5 µm or above were detected even when the temperature of the air was raised to 400 °C, and only about 10 particles of a diameter of 0.3 µm or above per 28.3 liters were detected at a maximum. As discussed above, it is confirmed that dust generated by the high-temperature filter of the present invention is highly suppressed.

The reference numerals used in the present specification and drawings are collectively shown below.
1 and 10 the high-temperature filter
2 the filtering medium
4 the separator
6 the frame
8 the end seals
14 the spacer

## Claims

1. A high-temperature filter comprising:
a filtering medium that is made of glass fibers, which filtering medium is folded in a zigzag pattern;
a separator that is folded in a wave shape, which separator is inserted into gaps of the folded filtering medium;
a frame that is made of stainless steel, which frame houses the filtering medium and the separator; and
end seals that are made of ceramic that is applied to the frame and is solidified after an end of the filtering medium is immersed thereinto, which ceramic is modified to have a coefficient of thermal expansion that is the same as that of the stainless steel.

2. The high-temperature filter of claim 1, wherein the separator is made of the same material as the glass fibers that form the filtering medium.

3. A high-temperature filter comprising:
a filtering medium that is made of glass fibers, which filtering medium is folded in a zigzag pattern;
a spacer that is made of the same material as the glass fibers that form the filtering medium, which spacer is located on a surface of the filtering medium;
a frame that is made of stainless steel, which frame houses the filtering medium and the space;
end seals that are made of ceramic that is applied to the frame and is solidified after an end of the filtering medium is immersed thereinto, which ceramic is modified to have a coefficient of thermal expansion that is the same as that of the stainless steel.

4. The high-temperature filter of any of claims 1 - 3, wherein the end seals are 3 mm thick or more and 5 mm thick or less.

5. The high-temperature filter of any of claims 1 - 4, wherein the filtering medium has a repellency of 3,000 Pa or more and 8,000 Pa or less in a test under U.S. Military Standards Q101.
